# EUROPEAN PATENT APPLICATION

(11) **EP 4 198 853 A1**
(43) Date of publication of application: **21.06.2023**
(21) Application number: 21855830.2
(22) Date of filing: 01.07.2021
(51) Int. Cl.: G06Q 10/06

(54) **WORK CONTENT ANALYSIS DEVICE, WORK CONTENT ANALYSIS METHOD, AND PROGRAM**

(30) Priority: 14.08.2020 JP 2020136965
(71) Applicant: Toshiba Digital Solutions Corporation, Kawasaki-shi, Kanagawa 212-0013 (JP)
(72) Inventor: ISHII, Ken, Kawasaki-shi, Kanagawa 212-0013 (JP); TAKAHASHI, Jun, Kawasaki-shi, Kanagawa 212-0013 (JP); TAKENOUCHI, Hiroki, Kawasaki-shi, Kanagawa 212-0013 (JP); KOBAYASHI, Hitoshi, Kawasaki-shi, Kanagawa 212-0013 (JP); KUSAKABE, Takashi, Kawasaki-shi, Kanagawa 212-0013 (JP); AKIMOTO, Yuto, Kawasaki-shi, Kanagawa 212-0013 (JP); Yamamoto, Kazuki, Kariya-shi, Aichi 448-8661 (JP); MORISHITA, Toshiyuki, Kariya-shi, Aichi 448-8661 (JP)
(74) Representative: AWA Sweden AB
(86) International application number: PCT/JP2021/024914
(87) International publication number: WO 2022/034751

(57) **Abstract**

Provided are a work content analysis apparatus, method, and program for analyzing a state of congestion or proximity of persons such as workers in an analysis target region such as a factory, for each area in the analysis target region. According to an embodiment a work content analysis apparatus includes a first database, an accumulation unit, and a classification unit. The database stores position information indicative of a position of a person in the analysis target region together with time information, in association with identification information of the person. The accumulation unit acquires a cumulative value in a predetermined item based on the position information and the time information stored in the first database in association with the identification information of the person. The classification unit classifies the each area based on the cumulative value acquired by the accumulation unit.

## Description

### FIELD

Embodiments described herein relate generally to a work content analysis apparatus, a work content analysis method, and a program for analyzing work contents of workers in a factory or the like based on states of the workers.

### BACKGROUND

Improvement in work efficiency generally follows steps of measuring the time required for actual work, analyzing the work procedure, visualizing the presently performed work and standardizing the procedure based on the measurement result and the analysis result, and guiding each worker to perform their work according to the standardized procedure.

However, such measurement of the work time necessary for analyzing the work procedure in the conventional art is done by a measurer using a stopwatch. This would result in extra labor costs.

The IoT may be utilized to measure the work time without incurring extra labor costs. In other words, there is an idea of replacing human work with the IoT.

Still, an amply provided IoT requires renovation of the factory equipment itself, and it is difficult to retrofit the IoT in factory equipment that is already in operation.

As such, even if the work contents are to be analyzed, extra labor costs would be incurred for collecting data for the analysis. If, by contrast, the labor costs are to be reduced, renovation of the equipment would be required. Work content analysis is therefore not an easy task to perform.

Under the current circumstances, there is no room at all to further take measures to improve work efficiency of suppliers, and the suppliers are left with measures to improve the work efficiency in their factories themselves.

### CITATION LIST

### PATENT LITERATURE

Patent Document 1
   Japanese Patent No. 4218669
Patent Document 2
   Japanese Patent No. 5198981
Patent Document 3
   Japanese Patent No. 5107206
Patent Document 4
   Japanese Patent No. 6520029
Patent Document 5
   Japanese Patent No. 6385613

### SUMMARY

Objects intended herein include providing a work content analysis apparatus, a work content analysis method, and a program for analyzing work contents of workers in a factory or the like, without incurring extra labor costs or requiring a significant renovation of the equipment.

According to an embodiment, A work content analysis apparatus for analyzing a state of congestion or proximity of persons for each area in an analysis target region, the work content analysis apparatus includes:
a first database configured to store position information indicative of a position of a person in the analysis target region together with time information, in association with identification information of the person;
an accumulation unit configured to acquire, for the each area, a cumulative value in a predetermined item based on the position information and the time information stored in the first database in association with the identification information of the person; and
a classification unit configured to classify, for the analyzing, the each area based on the cumulative value acquired by the accumulation unit.

### BRIEF DESCRIPTION OF THE DRAWINGS

FIG. 1 is a block diagram showing an exemplary electronic circuitry configuration of a work content analysis apparatus to which a work content analysis method according a first embodiment is applied.
FIG. 2 is a conceptual diagram showing one example of connection relationships of the work content analysis apparatus to other devices.
FIG. 3 is a plan view showing an exemplary arrangement of areas in a factory.
FIG. 4 is a diagram showing an exemplary graphical representation of an area stay history of each worker.
FIG. 5 is a diagram showing an example of area classification based on (1) a cumulative value of the number of times of entry into each area based on all workers.
FIG. 6 is a diagram showing an example of area classification based on (2) a cumulative value of the period of stay in each area based on all workers.
FIG. 7 is a diagram showing one example of mutual correlations of the areas, which are determined based on (3) a cumulative value of the number of inter-area movements based on all workers.
FIG. 8 is a flowchart showing an exemplary operation of the work content analysis apparatus to which the work content analysis method according the first embodiment is applied.
FIG. 9 is a diagram showing one exemplary representation of the number of persons who have made a stay, displayed for each area and along the time axis.
FIG. 10 is a flowchart showing an exemplary operation of a work content analysis apparatus to which a work content analysis method according a second embodiment is applied.

### DETAILED DESCRIPTION

Embodiments will be described with reference to the drawings.

### (First Embodiment)

A description will be given of a work content analysis apparatus to which a work content analysis method according to the first embodiment is applied.

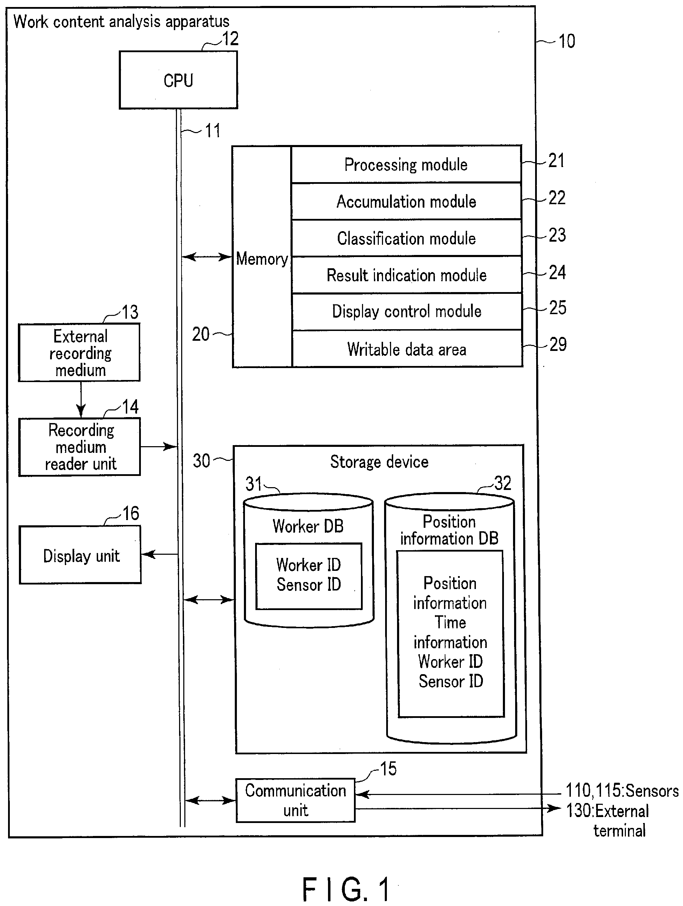

FIG. 1 is a block diagram showing an exemplary electronic circuitry configuration of a work content analysis apparatus to which a work content analysis method according the first embodiment is applied.

This work content analysis apparatus 10 is an apparatus to analyze the state of congestion, proximity, etc. of persons in an analysis target region, for each area in the analysis target region.

The description of the embodiment will assume, without intending any limitation, instances where the analysis target region is a factory and the persons are factory workers.

As shown in FIG. 1, the electronic circuitry of the work content analysis apparatus 10 includes a CPU 12, a recording medium reader unit 14, a communication unit 15, a display unit 16 (e.g., a display), a memory 20, and a storage device 30, which are connected to one another via a bus 11.

The memory 20 stores a processing module 21, an accumulation module 22, a classification module 23, a result indication module 24, and a display control module 25, in the form of a program or programs for realizing the work content analysis apparatus 10.

These program modules 21 to 25 may be stored in advance in the memory 20 or may be read from an external recording medium 13, which may be a memory card or the like, via the recording medium reader unit 14 and stored in the memory 20. The program modules 21 to 25 are adapted to be non-rewritable.

In addition to such user-non-rewritable memory areas, the memory 20 secures a writable data area 29 as a memory area for storing rewritable data.

The CPU 12 is one example of a processor or processors available for executing each of the program modules 21 to 25, and it controls operations of each circuitry component according to each of the program modules 21 to 25.

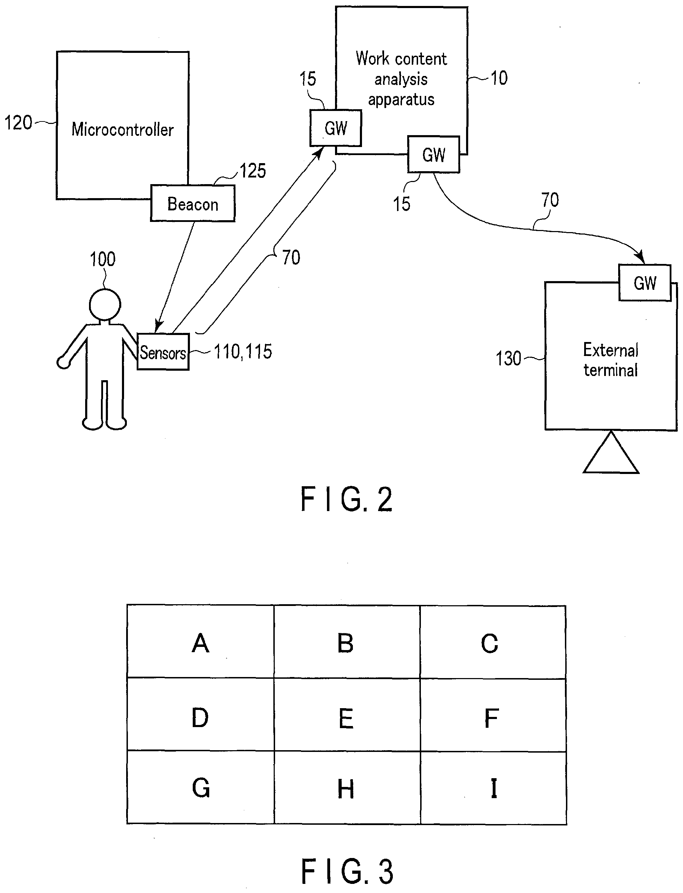

FIG. 2 is a conceptual diagram showing one example of connection relationships of the work content analysis apparatus to other devices.

A position sensor 110 which may be, for example, a wristwatch type sensor is assigned a unique sensor ID and is attached to each worker 100.

The position sensor 110 measures the position of the worker 100 by means of a GPS function, a WiFi function, or a beacon 125 and sends the position information based on the measurement together with the sensor ID to the work content analysis apparatus 10 via a communication network 70.

Instead of or in addition to such a position sensor 110, an image sensor 115, which may be a camera or the like, may be attached to each worker 100. The image sensor 115 is likewise assigned a unique sensor ID.

The image sensor 115 acquires an image along the line of sight of each worker 100 and sends the acquired image information together with the sensor ID to the work content analysis apparatus 10 via the communication network 70.

The storage device 30 includes a worker database 31 and a position information database 32.

The worker database 31 stores a worker ID (for example, an employee number or the like) of each worker 100. Also, the worker database 31 stores the sensor IDs of the position sensor 110 and the image sensor 115 attached to each worker 100, in association with the worker ID of the corresponding worker 100.

The position information database 32 is a database for storing position information on each worker 100 together with time information, in association with the worker ID of the worker 100.

The storage device 30 storing these databases 31 to 32 is constituted by, for example, a solid state drive (SSD), a hard disk drive (HDD), etc.

The communication unit 15 is connected to the communication network 70 so that it receives position information sent from the position sensor 110 and image information sent from the image sensor 115 together with their sensor IDs via the communication network 70 and that it outputs the received position information or image information to the processing module 21 together with the sensor ID.

FIG. 2 shows, as one example, a case where the position information (and/or the image information) from the position sensor 110 (and/or the image sensor 115) is received via the communication network 70 by the communication unit 15 implemented by a gateway.

Also, in order to have an analysis result, etc., which are for display on the display unit 16 by the display control module 25, displayed through an external terminal 130, the communication unit 15 may output data necessary for displaying the analysis result, etc. to the external terminal 130 via the communication network 70 as shown in FIG. 2.

The processing module 21, in response to the position information and the sensor ID being output from the communication unit 15, acquires the worker ID associated with this sensor ID from the worker database 31 and outputs the worker ID together with the position information and the sensor ID to the position information database 32.

Also, the processing module 21, in response to the image information and the sensor ID being output from the communication unit 15, acquires the worker ID associated with this sensor ID from the worker database 31 and additionally extracts position information from the image information using, for example, AI. The processing module 21 then similarly outputs the worker ID together with the extracted position information and the sensor ID to the position information database 32.

The position information database 32 stores the position information output from the processing module 21 in association with time information, the worker ID, and one or more sensor IDs. As the time information, the position information database 32 may use time information measured by an internal clock (not illustrated) of the work content analysis apparatus 10 or time information synchronized with a clock (time measurement means) of an external system connected with the work content analysis apparatus 10.

The accumulation module 22 acquires, for each area in the factory, cumulative values in predetermined items based on the position information and the time information stored in the position information database 32 in association with the worker IDs. Examples of such cumulative values in predetermined items include (1) a cumulative value of the number of times of entry into each area based on all workers, (2) a cumulative value of the period of stay in each area based on all workers, and (3) a cumulative value of the number of inter-area movements based on all workers.

To this end, the accumulation module 22 determines areas from the position information for all workers. Further, the accumulation module 22 generates an area stay history indicating, in a time series manner, areas where each worker has stayed, based on the determination result and the time information.

FIG. 3 is a plan view showing an exemplary arrangement of the areas in the factory.

In FIG. 3, A to I correspond to the areas arranged in the factory.

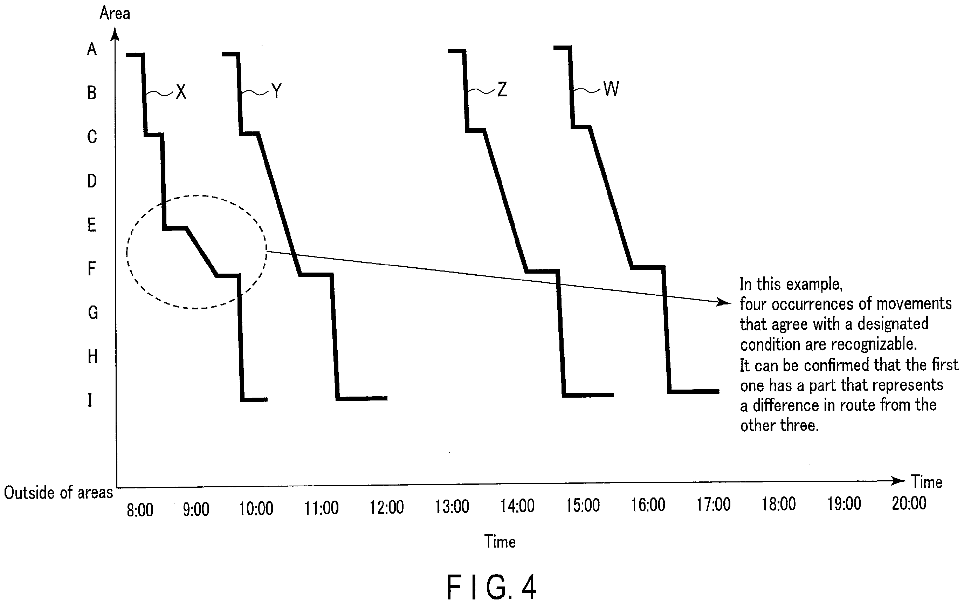

FIG. 4 is a diagram showing an exemplary graphical representation of the area stay history of each worker.

In FIG. 4, the vertical axis indicates the areas A to J, and the horizontal axis indicates time.

It can be seen from FIG. 4 that, for example, a worker X stayed in the area A for 15 minutes from 8 AM, then quickly moved to the area C and stayed there for 15 minutes, then quickly moved to the area E and stayed there for 15 minutes, then moved to the area F using a traveling time of about 30 minutes, and after staying in the area F for 15 minutes, quickly moved to the area I.

Similarly, the area stay history is given for each of workers Y, Z, and W.

According to such an area stay history, it is possible to visualize the actual behavior of each worker in regard to which area she or he stayed in and how long of a period she or he stayed there, to which area she or he then moved, and for how long of a period she or he stayed there.

Based on such an area stay history, the accumulation module 22 can acquire (1) the cumulative value of the number of times of entry into each area based on all workers, (2) the cumulative value of the period of stay in each area based on all workers, and (3) the cumulative value of the number of inter-area movements based on all workers.

The classification module 23 classifies, for analysis purposes, each area based on the cumulative value or values acquired by the accumulation module 22.

The result indication module 24 clearly presents the result of classification by the classification module 23 in the corresponding areas on a map of the factory, which is sectioned into predetermined areas.

The display control module 25 causes the display unit 16, and/or the external terminal 130, to display through a display screen the map with the classification result clearly indicated for each area by the result indication module 24. Not only is such a map with a clear indication by the result indication module 24 displayed, but the display control module 25 also causes the display unit 16, and/or the external terminal 130, to display through the display screen a correlation diagram generated by the classification module 23, as will be described.

Detailed configurations of the classification module 23, the result indication module 24, and the display control module 25 will be described altogether, for each exemplary case based on the above (1) to (3).

Supposing an example where the accumulation module 22 acquires (1) a cumulative value of the number of times of entry into each area based on all workers, the classification module 23 classifies the areas based on the numbers of entries accumulated for the respective areas.

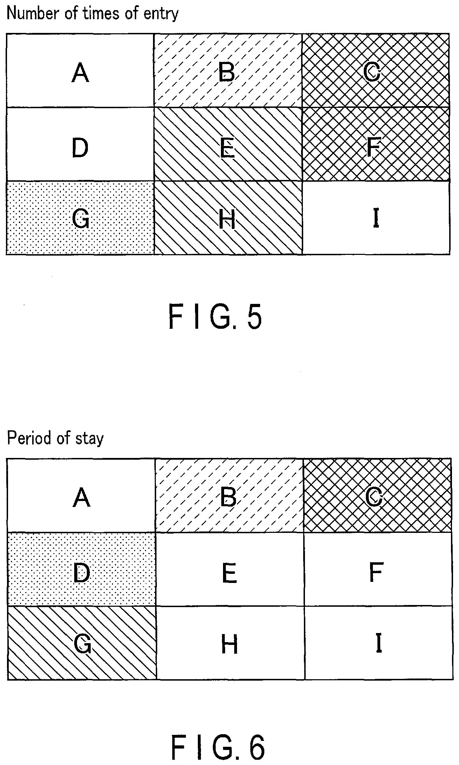

The result indication module 24 then provides a clear indication of the result of classification by the classification module 23 in the corresponding areas on the map of the factory sectioned into predetermined areas. FIG. 5 shows an example of this.

FIG. 5 is a diagram showing an example of area classification based on (1) the cumulative value of the number of times of entry into each area based on all workers.

For example, the cumulative value here amounts to 12 if a worker X enters the area A twice, a worker Y enters the area A five times, a worker Z enters the area A three times, and a worker W enters the area A twice.

In the example shown in FIG. 5, the classification module 23 classifies the areas A to I into five classes according to the cumulative values of the number of times of entry by all workers. In this example, the area G belongs to class 1 representing the largest entry number, the areas E and H belong to class 2 representing the second largest entry number, the areas A, D, and I belong to class 3 representing the third largest entry number, the areas C and F belong to class 4 representing the fourth largest entry number, and the area B belongs to class 5 representing the smallest entry number.

As shown in FIG. 5, the result of classification by the classification module 23 is clearly indicated by the result indication module 24 using different legends for the respective areas on the map of the factory.

The display control module 25 then causes the display unit 16 to display the map as shown in FIG. 5, and/or causes the external terminal 130 via the communication network 70 to display the map through its display screen.

Also, supposing an example where the accumulation module 22 acquires (2) a cumulative value of the period of stay in each area based on all workers, the classification module 23 classifies the areas based on the periods of stay accumulated for the respective areas.

The result indication module 24 then provides a clear indication of the result of classification by the classification module 23 in the corresponding areas on the map of the factory sectioned into predetermined areas. FIG. 6 shows an example of this.

FIG. 6 is a diagram showing an example of area classification based on (2) the cumulative value of the period of stay in each area based on all workers.

In the example shown in FIG. 6, the classification module 23 classifies the areas A to I into five classes according to the cumulative values of the period of stay by all workers. In this example, the area D belongs to class 1 representing the longest period of stay, the areas G and H belong to class 2 representing the second longest period of stay, the areas A, E, F, H, and I belong to class 3 representing the third longest period of stay, the area C belongs to class 4 representing the fourth longest period of stay, and the area B belongs to class 5 representing the shortest period of stay.

As shown in FIG. 6, the result of classification by the classification module 23 is clearly indicated by the result indication module 24 using different legends for the respective areas on the map of the factory.

The display control module 25 then causes the display unit 16 to display the map as shown in FIG. 6, and/or causes the external terminal 130 via the communication network 70 to display the map through its display screen.

Also, supposing an example where the accumulation module 22 acquires (3) a cumulative value of the number of inter-area movements based on all workers, the classification module 23 determines mutual correlations of the areas based on the accumulated numbers of inter-area movements.

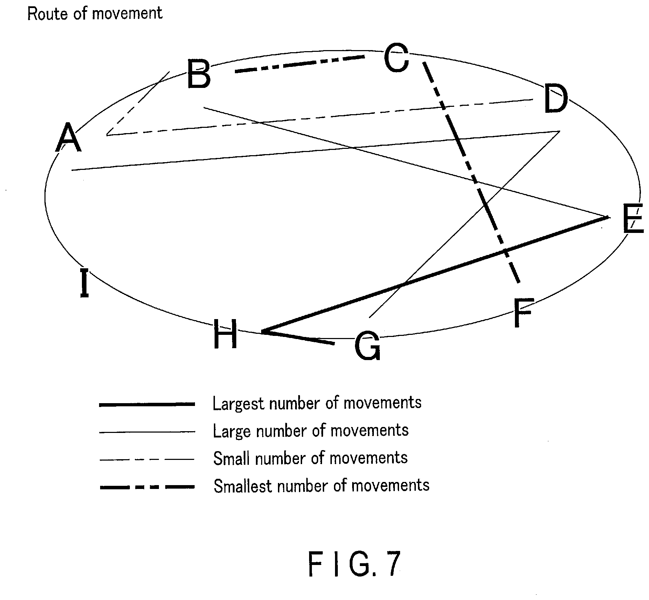

FIG. 7 is a diagram showing one example of the mutual correlations of the areas, which are determined based on (3) the cumulative value of the number of inter-area movements based on all workers.

In FIG. 7, solid lines indicate many movements, and broken lines indicate a few movements. Among the solid lines, a bolder solid line indicates a larger number of movements. Among the broken lines, a bolder broken line indicates a smaller number of movements.

The display control module 25 causes the display unit 16 to display the correlation diagram as shown in FIG. 7, and/or causes the external terminal 130 via the communication network 70 to display the correlation diagram through its display screen.

Next, a description will be given of an exemplary operation of the work content analysis apparatus configured as above, to which the work content analysis method according to the first embodiment is applied.

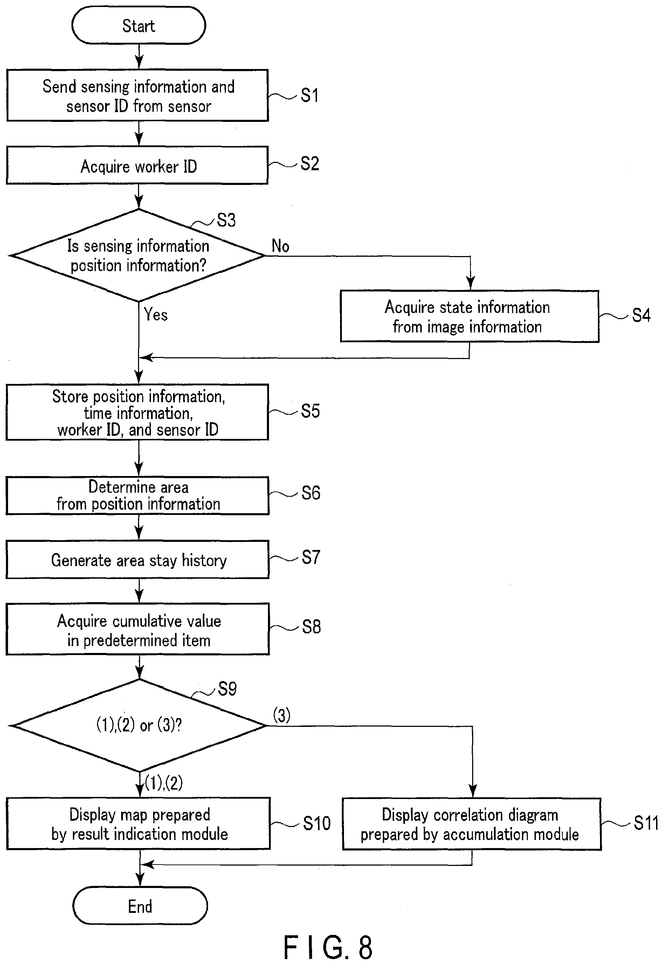

FIG. 8 is a flowchart showing an exemplary operation of the work content analysis apparatus to which the work content analysis method according the first embodiment is applied.

The position sensor 110 with a unique sensor ID is attached to each worker 100. Instead of or in addition to the position sensor 110, the image sensor 115, which may be a camera or the like, may be attached to each worker 100.

The position information on each worker 100 measured by the position sensor 110, i.e., sensing information obtained by the position sensor 110, is sent from the position sensor 110 to the work content analysis apparatus 10 together with the sensor ID. The image information acquired by the image sensor 115, i.e., sensing information obtained by the image sensor 115, is also sent from the image sensor 115 to the work content analysis apparatus 10 via the communication network 70, together with the corresponding sensor ID (S1).

The position information, i.e., sensing information, and the sensor ID from the position sensor 110, as well as the image information, i.e., sensing information, and the sensor ID from the image sensor 115 are received by the communication unit 15 in the work content analysis apparatus 10, and then output from the communication unit 15 to the processing module 21.

The processing module 21, in response to the position information and the sensor ID being output from the communication unit 15, acquires the worker ID associated with this sensor ID from the worker database 31. The processing module 21, in response to the image information and the sensor ID being output from the communication unit 15, likewise acquires the worker ID associated with this sensor ID from the worker database 31 (S2).

Then, if the sensing information sent in step S1 is the position information (S3: Yes), the processing module 21 outputs the worker ID acquired in step S2 to the position information database 32 together with the position information and the corresponding sensor ID, whereby the position information is stored in the position information database 32 in association with the worker ID, the sensor ID, and also time information (S5).

On the other hand, if the sensing information sent in step S1 is the image information (S3: No), the processing module 21 acquires position information from the image information using, for example, AI (S4). The processing module 21 then outputs the worker ID acquired in step S2 to the position information database 32 together with the position information acquired in step S4 and the corresponding sensor ID, whereby this position information is stored in the position information database 32 in association with the worker ID, the sensor ID, and also time information (S5).

Then, based on the information stored in the position information database 32, the accumulation module 22 determines, for all workers, areas from the position information (S6). Further, the accumulation module 22 generates an area stay history as illustrated in FIG. 4, which indicates areas where each worker has stayed in a time series manner, based on the result of this determination and the time information (S7).

With such an area stay history, the accumulation module 22 acquires cumulative values in predetermined items (S8). Examples of the cumulative values in predetermined items include (1) a cumulative value of the number of times of entry into each area based on all workers, (2) a cumulative value of the period of stay in each area based on all workers, and (3) a cumulative value of the number of inter-area movements based on all workers.

In response to the accumulation module 22 acquiring (1) the cumulative value of the number of times of entry into each area based on all workers, and also in response to the accumulation module 22 acquiring (2) the cumulative value of the period of stay in each area based on all workers (S9: (1) or (2)), the classification module 23 classifies, for analysis purposes, the areas based on the cumulative values. The result indication module 24 puts a clear indication of the result of this classification in the corresponding areas on a map, and the display control module 25 causes the display unit 16, or the external terminal 130 via the communication network 70, to display through the display screen the resultant map as shown in FIG. 5 or FIG. 6 as the analysis result (S10).

On the other hand, in response to the accumulation module 22 acquiring (3) the cumulative value of the number of inter-area movements based on all workers (S9: (3)), the classification module 23 determines mutual correlations of the areas based on the accumulated numbers of inter-area movements. The display control module 25 causes the display unit 16, or the external terminal 130 via the communication network 70, to display through the display screen the resultant correlation diagram as shown in FIG. 7 as the analysis result (S11).

As described above, with the work content analysis apparatus to which the work content analysis method according to the first embodiment is applied, it is possible to obtain analysis results as shown in, for example, FIGS. 5 to 7. Further, by using these analysis results for reference, the state of congestion, proximity, etc. of persons such as workers in an analysis target region such as a factory can be analyzed for each area in the analysis target region.

In particular, referring to the analysis result as shown in FIG. 5 enables comprehension of the degree of frequency of stay for each area.

Also, referring to the analysis result as shown in FIG. 6 enables comprehension of the length of period of stay for each area.

As one example, in order to improve the productivity of an entire factory, it is desirable to review and change the layout. Here, commonly used devices may be arranged in an area where many workers stop by, that is, where the frequency of stay is high and the period of stay is long. On the other hand, rarely used devices may be arranged in an area where not many workers stop by, that is, where the frequency of stay is low and/or the period of stay is short.

The analysis results as shown in FIGS. 5 and 6 can be effectively utilized for considering and determining such an optimum arrangement of devices. They can also be effectively utilized for considering and determining areas for arrangement of devices so that unnecessary congestion, proximity, etc. of workers will be suppressed as much as possible.

Referring to the analysis result as shown in FIG. 7 enables comprehension of the degree of frequency of inter-area movements.

Therefore, the analysis results as shown in FIGS. 5 and 6, together with the analysis result as shown in FIG. 7, can be effectively utilized as references for considering and determining the layout, while suppressing the congestion, proximity, etc. of workers in movement.

For example, it is efficient from the viewpoint of productivity to arrange a linear manufacturing line for main products and to dispose frequently used devices on the manufacturing line. This naturally limits the areas to stay for each of the workers, and can accordingly reduce the density of persons.

On the other hand, from the viewpoint of the theory of constraint (throughput), productivity can be improved by substituting a bottleneck process with a device that gives a high production efficiency, dividing a production process, increasing the number of workers, and so on.

### (Second Embodiment)

A work content analysis apparatus, to which a work content analysis method according to the second embodiment is applied, will be described.

A configuration of this work content analysis apparatus to which the work content analysis method according to the second embodiment is applied can be described with reference to FIG. 1. Thus, the description will be given with reference to FIG. 1, on the points different from the first embodiment and without a repetitive explanation.

According to the present embodiment, the accumulation module 22 accumulates the number of persons who have made a stay, for each area and for a unit of time based on the position information and the time information stored in the position information database 32 in association with the workers.

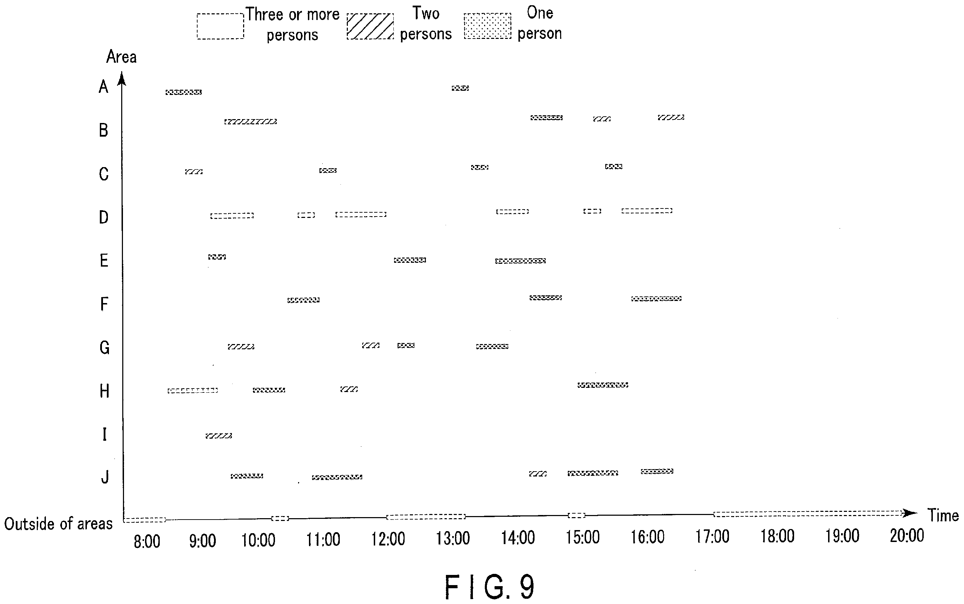

According to the result of accumulation by the accumulation module 22, the display control module 25 causes information on the number of persons who have made a stay to be displayed for each area and along a time axis. FIG. 9 shows an example of this.

FIG. 9 is a diagram showing one exemplary representation of the number of persons who have made a stay, displayed for each area and along a time axis.

In FIG. 9, the vertical axis indicates areas A to J, and the horizontal axis indicates time. It can be understood from FIG. 9 how many workers (one, two, or three or more workers) stay in each area, and in which time slot and for how long of a period the worker or workers stay.

Next, a description will be given of an exemplary operation of the work content analysis apparatus configured as above, to which the work content analysis method according to the second embodiment is applied.

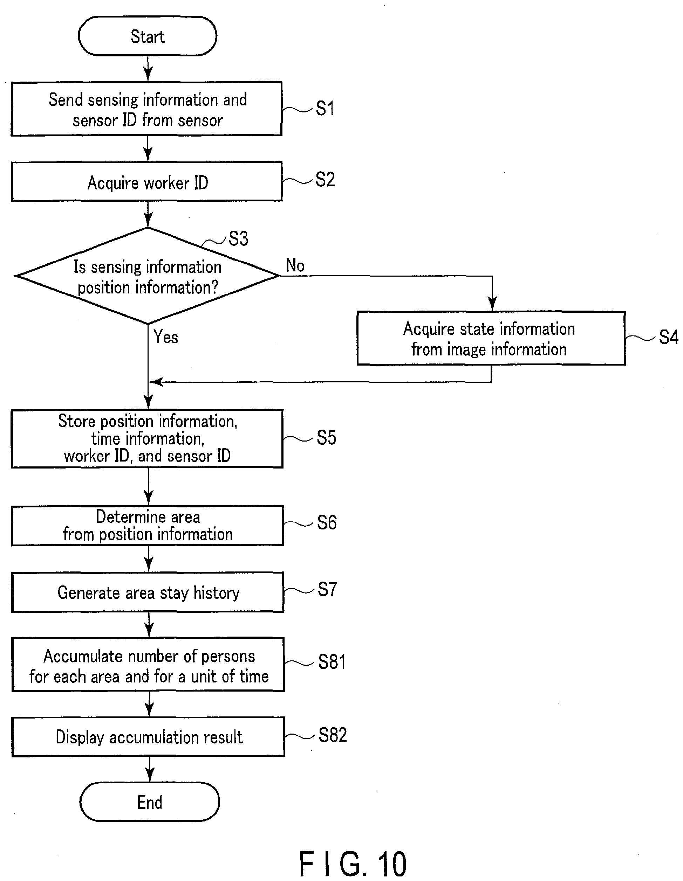

FIG. 10 is a flowchart showing an exemplary operation of the work content analysis apparatus to which the work content analysis method according the second embodiment is applied.

FIG. 10 uses the same step numbering for the same processes as those shown in FIG. 8. The description will be given on the different contents while avoiding redundant explanation.

In the present embodiment, the accumulation module 22 accumulates, after step S7, the number of persons who have made a stay, for each area and for a unit of time based on the information stored in the position information database 32 (S81).

In response to this, the display control module 25 causes the display unit 16 or the external terminal 130 to display through the display screen the result of accumulation in step S81, as shown in FIG. 9 (S82).

As in FIG. 9, the number of persons who have made a stay is displayed for each area and along a time axis, and therefore, it can be understood how many workers (one, two, or three or more workers) stay in each area, and in which time slot and for how long of a period the worker or workers stay.

With the analysis result as shown in FIG. 9, it is possible to comprehend, for each area, the time slot by time slot state of congestion, proximity, etc. of workers, from the viewpoint of finding in which time slots the workers are gathered or not gathered and whether the period of gathering is long or short. Such a result, together with the analysis results as shown in FIGS. 5, 6, and 7, can also be effectively utilized for considering and determining an optimum layout, while suppressing the congestion, proximity, etc. of workers in movement.

While certain embodiments have been described, they have been presented by way of example only, and they are not intended to limit the scope of the inventions. These embodiments may be implemented in a variety of other forms with various omissions, substitutions, and changes without departing from the spirit of the inventions. The embodiments and their modifications are covered by the accompanying claims and their equivalents, as would fall within the scope and the gist of the claimed inventions.

## Claims

1. A work content analysis apparatus for analyzing a state of congestion or proximity of persons for each area in an analysis target region, the work content analysis apparatus comprising:
a first database configured to store position information indicative of a position of a person in the analysis target region together with time information, in association with identification information of the person;
an accumulation unit configured to acquire, for said each area, a cumulative value in a predetermined item based on the position information and the time information stored in the first database in association with the identification information of the person; and
a classification unit configured to classify, for said analyzing, said each area based on the cumulative value acquired by the accumulation unit.

2. The work content analysis apparatus according to claim 1, wherein
the cumulative value in the predetermined item comprises a cumulative value of a number of times of entry into said each area by the person, and
the classification unit is configured to classify said each area based on the cumulative value of the number of times of entry for said each area.

3. The work content analysis apparatus according to claim 1, wherein
the cumulative value in the predetermined item comprises a cumulative value of a period of stay in said each area by the person, and
the classification unit is configured to classify said each area based on the cumulative value of the period of stay for said each area.

4. The work content analysis apparatus according to any one of claims 1 to 3, further comprising:
a result indication unit configured to provide an indication of a result of classification by the classification unit in a corresponding area on a map of the analysis target region sectioned into areas comprising said each area; and
a display control unit configured to cause the map to be displayed, the map showing the indication of the result of classification by the classification unit in the corresponding area.

5. The work content analysis apparatus according to claim 1, wherein
the cumulative value in the predetermined item comprises a cumulative value of a number of inter-area movements by the person, and
the classification unit is configured to determine an inter-area correlation based on the cumulative value of the number of inter-area movements,
the work content analysis apparatus further comprising a display control unit configured to cause a correlation diagram indicative of the inter-area correlation to be displayed.

6. The work content analysis apparatus according to claim 1, wherein the position information is output from a sensor attached to the person.

7. The work content analysis apparatus according to claim 6, wherein
the sensor is configured to output the position information together with unique sensor identification information assigned to the sensor,
the work content analysis apparatus further comprising:
a second database configured to store the identification information of the person and the sensor identification information assigned to the sensor attached to the person, in association with each other; and
a processing unit configured to acquire, in response to the sensor outputting the sensor identification information, the identification information of the person associated with the sensor identification information from the second database.

8. The work content analysis apparatus according to claim 7, wherein
the sensor comprises a camera configured to output image information, and
the processing unit is configured to detect, using AI, the position information of the person with the camera from the image information output from the camera.

9. A work content analysis apparatus for analyzing a state of congestion or proximity of persons for each area in an analysis target region, the work content analysis apparatus comprising:
a first database configured to store position information indicative of a position of a person in the analysis target region together with time information, in association with identification information of the person;
an accumulation unit configured to accumulate a number of persons who have made a stay, for said each area and for a unit of time, based on the position information and the time information stored in the first database in association with the identification information of the person; and
a display control unit configured to cause, for said analyzing, information on the number of persons who have made a stay to be displayed for said each area and along a time axis, according to a result of accumulation by the accumulation unit.

10. The work content analysis apparatus according to claim 9, wherein the position information is output from a sensor attached to the person.

11. The work content analysis apparatus according to claim 10, wherein
the sensor is configured to output the position information together with unique sensor identification information assigned to the sensor,
the work content analysis apparatus further comprising:
a second database configured to store the identification information of the person and the sensor identification information assigned to the sensor attached to the person, in association with each other; and
a processing unit configured to acquire, in response to the sensor outputting the sensor identification information, the identification information of the person associated with the sensor identification information from the second database.

12. The work content analysis apparatus according to claim 11, wherein
the sensor comprises a camera configured to output image information, and
the processing unit is configured to detect, using AI, the position information of the person with the camera from the image information output from the camera.

13. A work content analysis method performed by a work content analysis apparatus for analyzing a state of congestion or proximity of persons for each area in an analysis target region, the work content analysis method comprising:
storing, in a first database and by the work content analysis apparatus, position information indicative of a position of a person in the analysis target region together with time information, in association with identification information of the person;
acquiring, for said each area and by the work content analysis apparatus, a cumulative value in a predetermined item based on the position information and the time information stored in the first database in association with the identification information of the person; and
classifying, for said analyzing and by the work content analysis apparatus, said each area based on the acquired cumulative value.

14. A program for analyzing a state of congestion or proximity of persons for each area in an analysis target region, the program causing a computer to realize functions including:
a function of storing, in a first database, position information indicative of a position of a person in the analysis target region together with time information, in association with identification information of the person;
a function of acquiring, for said each area, a cumulative value in a predetermined item based on the position information and the time information stored in the first database in association with the identification information of the person; and
a function of classifying, for said analyzing, said each area based on the acquired cumulative value.
